# FASCICULE DE BREVET EUROPEEN

(11) **EP 2 554 492 B1**
(45) Date de publication et mention de la délivrance du brevet: **02.09.2015**
(21) Numéro de dépôt: 12177371.7
(22) Date de dépôt: 20.07.2012
(51) Int. Cl.: B65D 88/06, B65D 90/00, B65D 90/02, B65D 90/08, B65D 90/12, B60P 3/22

(54) **Citerne autoportée en matériau composite, véhicule comportant une telle citerne et procédé de réalisation d'un corps de citerne en matériau composite**
Tankwagen aus Verbundmaterial, Wagen damit und Herstellungsverfahren eines Tankkörpers aus Verbundmaterial
Self-supporting tank made of composite material, vehicle therewith and method for producing a tank body made of composite material

(30) Priorité: 01.08.2011 FR 1157021
(43) Date de publication de la demande: 06.02.2013
(73) Titulaire: Etablissements MAGYAR, 21000 Dijon (FR)
(72) Inventeur: Magyar, Daniel, 21000 DIJON (FR); Magyar, Laurent, 75001 PARIS (FR)
(74) Mandataire: Lebkiri, Alexandre

(56) Documents cités:
- WO-A1-83/01924
- CH-A- 472 325
- DE-U1- 29 512 117
- US-B1- 6 361 635

## Description

### DOMAINE TECHNIQUE

La présente invention se rapporte au domaine des citernes autoportées et des véhicules citernes autoportés. Par « citerne autoportée », on entend une citerne apte à susceptible de supporter son poids propre et le poids de son contenu sans le concours d'une ossature de soutien. Par « véhicule citerne autoporté », on entend un véhicule tracté comportant un corps de citerne pourvu d'une attache de traction et supporté par au moins un train de roue. Un tel véhicule citerne autoporté ne comporte pas de châssis continu et les efforts de traction sont transmis de l'attache de traction vers le train de roues par l'intermédiaire du corps de citerne. Un tel véhicule citerne autoporté forme par exemple une citerne semi-remorque ou remorque pour le transport de produits gazeux, liquides, pâteux ou pulvérulents.

### ETAT DE LA TECHNIQUE ANTERIEUR

Généralement, les véhicules citernes autoportées comportent un corps de citerne en acier inoxydable. Ce corps de citerne est pourvu d'une attache de traction et il est supporté par au moins un train de roues. Les forces de traction sont transmises de l'attache de traction au train de roues par l'intermédiaire du corps de citerne en acier inoxydable. Une telle citerne est par exemple décrite dans le document EP0610567.

Ces citernes en acier doivent être conçues pour être particulièrement résistantes, à la fois vis-à-vis de la pression due au fluide transporté, mais aussi vis-à-vis des forces de traction. Par ailleurs, l'acier est très avantageux puisqu'il peut être mis en contact avec des denrées alimentaires sans qu'il n'y ait de risque de contamination.

Cependant, les citernes en acier sont très lourdes et elles isolent mal thermiquement les produits transportés.

On connaît par ailleurs des véhicules citernes autoportés dont le corps de citerne est constitué en matériau composite. Un tel véhicule est décrit par exemple dans le document EP0698526. Dans ce document, le véhicule citerne comporte un réservoir horizontal qui est fabriqué en un matériau composite renforcé par des fibres et inséré dans un logement en forme de coque, également réalisé en un matériau composite renforcé par des fibres. La citerne se distingue par sa légèreté. Toutefois, la fabrication d'une telle citerne se révèle particulièrement complexe eu égard à la taille du réservoir horizontal et à la taille de la coque.

Le document US3158383 décrit également un véhicule citerne autoporté dont le corps de citerne, qui transmet sans l'aide d'un châssis les efforts de traction et supporte les efforts de flexion et de pression, est composé d'un matériau composite. Cependant, ce corps de citerne est fabriqué d'un seul tenant et par conséquent, les dimensions de ce corps de citerne compliquent sa fabrication.

On connaît également le document FR2715385 qui décrit une cuve modulaire de grand module en polypropylène ou polyéthylène constituée d'une pluralité de modules centraux présentant chacun au moins une extrémité ouverte pourvue d'une saillie annulaire, les modules étant reliés entre eux par l'intermédiaire d'un profilé annulaire qui est intercalé entre les deux saillies de deux modules successifs. Cependant une telle cuve n'est pas autoportée et elle n'est pas conçue pour transmettre des efforts de traction. En particulier, les interfaces entre deux jonctions sont conçues pour être étanches et pour résister à la pression mais elles ne sont pas assez résistantes pour transmettre des efforts de traction.

On connait également le document FR2943995 qui décrit un véhicule citerne autoporté dans le corps de citerne est constitué de tronçons en matériau composite, ces tronçons étant assemblés grâce à des inserts insérés dans la mousse de la structure sandwich qui forme les tronçons. Toutefois, ce mode de fixation des tronçons entre eux est relativement compliqué, et il peut entraîner une diminution du pouvoir isolant thermiquement des parois de la citerne.

On connait également le document CH472325 qui décrit un véhicule citerne autoporté dont le corps de citerne est constitué de tronçons assemblés deux à deux par soudage ou au moyen d'un renfort en matériau composite. Toutefois, ce mode de fixation des tronçons entre eux n'est pas suffisant pour résister aux contraintes de traction.

### EXPOSE DE L'INVENTION

L'invention vise à remédier aux inconvénients de l'état de la technique en proposant une citerne autoportée simple à fabriquer et légère.

Pour ce faire, est proposé selon un premier aspect de l'invention, une citerne autoportée selon la revendication 1, laquelle comporte un corps de citerne comportant plusieurs tronçons, les tronçons étant assemblés entre eux par soudage, les tronçons étant en outre recouverts d'une première peau en matériau composite comportant un enroulement filamentaire qui maintient les tronçons assemblés, la première peau étant recouverte d'un matériau alvéolaire léger, le matériau alvéolaire léger étant recouvert d'une peau extérieure en matériau composite.

Ainsi, le corps de citerne en matériau composite est réalisé à partir de plusieurs tronçons, qui sont réalisés indépendamment les uns des autres. On peut ainsi mieux contrôler leur forme et leur fabrication, puisque ces tronçons présentent des dimensions longitudinales limitées. En outre, ces tronçons peuvent être transportés et stockés plus facilement.

Une fois, ces tronçons réalisés, ils sont assemblés entre eux par soudage et enroulement filamentaire, ce qui permet au corps de citerne ainsi réalisé d'être léger et résistant.

La citerne autoportée selon l'invention peut également présenter une ou plusieurs des caractéristiques ci-dessous prises individuellement ou selon toutes les combinaisons techniquement possibles.

Avantageusement, chaque tronçon comporte une paroi latérale. Cette paroi latérale est de préférence réalisée dans un matériau plastique ou composite.

Ce matériau plastique peut par exemple être du PVC ou du polypropylène. Ces parois latérales des tronçons forment ainsi la paroi interne du corps de citerne, qui est en contact avec le contenu de la citerne.

Avantageusement, la première peau comporte des fibres, ces fibres étant enroulées autour des tronçons selon deux directions, ce qui permet d'augmenter la résistance mécanique du corps de citerne ainsi réalisé. Les fibres forment l'enroulement filamentaire.

Le corps de citerne s'étend de préférence suivant un axe de référence.

Dans ce document, on désigne par « longitudinale » une direction parallèle à l'axe de référence, et par « transversale », une direction perpendiculaire à l'axe de référence.

La première peau comporte de préférence deux groupes de fibres :
- un premier groupe de fibres qui forment un angle de 90° avec l'axe de référence,
- un deuxième groupe de fibres qui forment un angle compris entre 40° et 60° avec l'axe de référence.

Le premier groupe de fibres est de préférence enroulé sur les tronçons, tandis que le deuxième groupe de fibres est enroulé sur le premier groupe de fibres.

Ainsi, la première peau comporte de préférence deux couches, correspondant aux deux groupes de fibres.

La première peau comporte de préférence, une matrice.

Les fibres sont de préférence des fibres de carbone.

La matrice est de préférence une résine, qui peut être prise dans le groupe suivant : résine polyester, résine vinylester, résine epoxyde, résine phénolique résine thermoplastique (polypropylène, polyamide).

Le matériau alvéolaire léger peut être une mousse, par exemple une mousse polyuréthane, ou du balsa, en fonction de la résistance au feu et aux efforts mécaniques que l'on veut pour le corps de citerne. On peut également utiliser à la fois de la mousse polyuréthane, et du balsa, le balsa étant de préférence placé aux endroits les plus sollicités mécaniquement de façon à augmenter la résistance mécanique du corps de citerne.

La peau extérieure en matériau composite comporte également une résine et des fibres. Ces fibres sont également de préférence des fibres de carbone.

Avantageusement, le corps de citerne présente deux extrémités, chaque extrémité étant pourvue d'un fond de citerne en matériau composite.

Les fonds de citerne présentent de préférence également une structure sandwich. Cette structure sandwich comporte de préférence une paroi intérieure, de préférence en matière plastique, un matériau alvéolaire léger et une paroi extérieure en matériau composite. La paroi intérieure de chaque fond de citerne est de préférence située dans la continuité de la paroi latérale des tronçons, et la paroi extérieure de chaque fond de citerne est de préférence située dans la continuité de la peau extérieure du corps de citerne.

Avantageusement, chaque tronçon comporte une paroi latérale, au moins un des tronçons étant pourvu d'une cloison, la cloison étant encastrée dans la paroi latérale dudit tronçon. Ainsi, la cloison, et sa fixation au corps de citerne, résiste mieux au mouvement du liquide transporté, et dans le cas de la cloison pleine, à la différence de pression éventuelle qu'il peut exister de part et d'autre de cette cloison.

La cloison peut être pleine ou creuse. La cloison peut être réalisée dans un matériau plastique ou composite. La cloison peut comporter une seule paroi ou alors elle peut être composée d'une structure sandwich.

Selon un mode de réalisation préférentiel, la cloison est formée d'une structure sandwich comportant deux parois plastiques entre lesquelles se trouve un stratifié. Dans le cas où un des compartiments défini par la cloison est sous pression, le stratifié est de préférence encastré dans la première peau qui assemble les tronçons entre eux de façon à augmenter la résistance de la liaison entre la cloison et le tronçon qui la contient.

Avantageusement, la cloison est en outre soudée à la paroi latérale dudit tronçon de façon à augmenter la résistance de sa liaison avec le tronçon qui la contient et à assurer l'étanchéité.

Avantageusement, le corps de citerne est pourvu de berces permettant au corps de citerne de venir en appui sur un support, les berces étant fixées au corps de citerne par une deuxième peau en matériau composite. Ce mode de fixation permet un gain de poids, tout en étant très résistant. Ainsi, les berces sont également fixées au corps de citerne par enroulement filamentaire.

Chaque berce comporte de préférence une surface d'appui qui épouse une partie du corps de citerne. Cette surface d'appui ne fait de préférence pas le tour de la circonférence du corps de citerne, mais épouse juste une portion du corps de citerne, ce qui permet d'alléger le poids de la citerne.

La deuxième peau qui permet de fixer les berces au corps de citerne comporte une résine, et des fibres. Ces fibres sont de préférence des fibres de carbone.

Avantageusement, les berces sont constituées d'un matériau composite présentant une structure sandwich.

Le nombre de berces utilisées dépend notamment de la longueur du corps de citerne.

Selon un mode de réalisation, la citerne comporte en outre des canaux de réchauffage situés au contact du matériau alvéolaire léger, entre la première peau et le matériau alvéolaire léger. Dans ce cas, ces canaux de réchauffage sont aptes à contenir un fluide chaud qui circule dans ces canaux de réchauffage. On pourrait également prévoir de faire circuler un fluide froid dans ces canaux de façon à refroidir le contenu du corps de citerne.

Un autre aspect de l'invention concerne également un véhicule citerne autoporté selon la revendication 10 comportant une citerne autoportée selon le premier aspect de l'invention.

Avantageusement, le véhicule citerne comporte en outre une structure routière.

Dans ce cas, les berces sont de préférence fixées à la structure routière par l'intermédiaire d'équerres boulonnées sur lesdites berces. Le boulonnage des équerres sur les berces est de préférence traversant.

Un autre aspect de l'invention concerne un procédé de réalisation d'un corps de citerne pour citerne autoportée selon la revendication 12, lequel comporte les étapes suivantes:
- Réalisation de tronçons;
- Assemblage de ces tronçons entre eux par soudage ;
- Recouvrement de l'assemblage de tronçons par une première peau en matériau composite qui comporte un enroulement filamentaire qui maintient les tronçons assemblés;
- Recouvrement de la première peau en matériau composite par un matériau alvéolaire léger ;
- Recouvrement du matériau alvéolaire léger par une peau extérieure en matériau composite.

Le procédé selon l'invention propose donc d'assembler les tronçons par soudage et par enroulement filamentaire grâce à la première peau.

Avantageusement, les tronçons sont formés par mise en forme à chaud et rigidification d'une couche de matière plastique.

Chaque fond de citerne comporte de préférence une paroi intérieure en plastique, recouverte d'un matériau composite, lui-même recouvert d'un matériau alvéolaire léger et d'une peau extérieure en matériau composite.

Selon un mode de réalisation, le procédé comporte en outre une étape de fixation de deux fonds de citerne en matériau composite sur chacune des extrémités du corps de citerne. Pour cela, on soude de préférence bout à bout la paroi intérieure de chaque fond de citerne avec la paroi latérale du corps de citerne, puis on recouvre localement d'une stratification d'assemblage par enroulement filamentaire.

Avantageusement, lors de l'étape de réalisation des tronçons, au moins un des tronçons est pourvu d'une cloison transversale. Ainsi, les tronçons, pourvus de leurs cloisons éventuelles, sont fabriqués au préalable, puis ils sont assemblés ensemble, ce qui permet de simplifier le procédé de fabrication du corps de citerne. En outre, le fait de fixer les cloisons dans les tronçons avant d'assembler les tronçons entre eux permet d'avoir des interfaces cloison-paroi latérale du tronçon plus étanche et plus solide que dans l'art antérieur, puisque ainsi les cloisons sont encastrées dans la paroi latérale des tronçons.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un véhicule citerne autoporté selon un mode de réalisation de l'invention ;
- La figure 2, une vue en coupe du corps de citerne du véhicule de la figure 1 lors de sa fabrication ;
- La figure 3, une vue en coupe de la jonction entre la paroi latérale d'un des tronçons du corps de citerne de la figure 2 et une cloison ;
- La figure 4, une vue en coupe de la jonction entre la paroi latérale d'un des tronçons du corps de citerne de la figure 2 et une cloison selon un autre mode de réalisation de l'invention ;
- La figure 5, une vue en perspective de deux berces selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

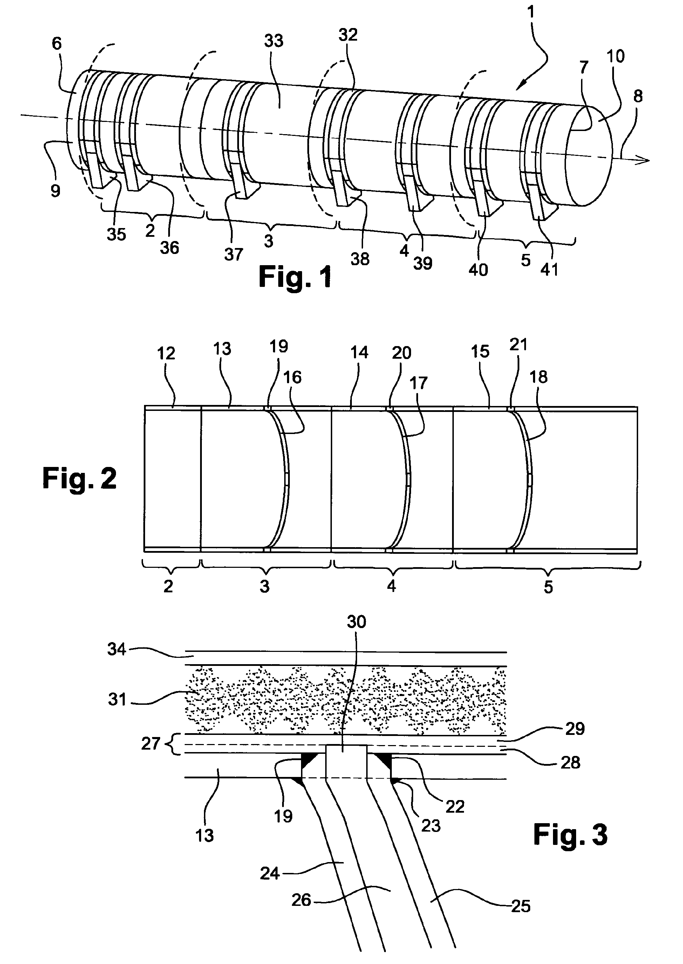

La figure 1 représente un véhicule citerne autoporté selon un mode de réalisation de l'invention. Ce véhicule citerne comporte un corps de citerne 1. Le corps de citerne 1 s'étend suivant un axe de référence 8. Le corps de citerne 1 est cylindrique autour de l'axe de référence 8. Le corps de citerne 1 comporte deux extrémités 6 et 7 pourvues chacune d'un fond de citerne 9, 10.

La composition du corps de citerne 1 et un procédé de fabrication de ce corps de citerne vont maintenant être décrit en référence aux figures 2 à 5.

Ainsi, le corps de citerne 1 comporte plusieurs tronçons 2, 3, 4, 5. Chacun de ces tronçons 2, 3, 4, 5 comporte une paroi latérale 12, 13, 14, 15 cylindrique autour de l'axe de référence 8. Cette paroi latérale 12, 13, 14, 15 est de préférence réalisée dans un matériau plastique.

Ainsi, dans cet exemple de réalisation, chacune des parois latérales 12, 13, 14, 15 est composée d'un revêtement en plastique de 3 mm d'épaisseur, en PVC ou en polypropylène. Ce revêtement en plastique est ensuite rigidifié.

La paroi latérale de chaque tronçon est de préférence réalisée dans le matériau qu'on voudra voir en contact avec le contenu de la citerne, puisque la paroi latérale de chaque tronçon formera la paroi intérieure de la citerne.

Lorsque l'on veut que le corps de citerne comporte des cloisons internes, ces cloisons 16, 17, 18 sont de préférence directement intégrées aux tronçons. Ainsi, les tronçons 3, 4, 5 qui doivent comporter des cloisons 16, 17, 18 sont directement formés avec leurs cloisons 16, 17, 18. Pour cela, chaque cloison 16, 17 et 18 est directement encastrée dans la paroi latérale 13, 14, 15 du tronçon à laquelle elle appartient, comme on peut le voir plus précisément sur la figure 3. Chaque cloison 16, 17, 18 présente donc un pourtour 19, 20, 21 qui est encastré dans la paroi latérale 13, 14, 15 du tronçon auquel elle appartient.

En outre, chaque cloison 16, 17, 18 est soudée à la paroi latérale 13, 14, 15 du tronçon auquel elle appartient. Dans le cas présent, chaque cloison est de préférence soudée à la paroi latérale à la fois par une soudure intérieure 22 et par une soudure extérieure 23.

Chaque cloison 16, 17, 18 peut être formée par un matériau plastique ou un matériau composite.

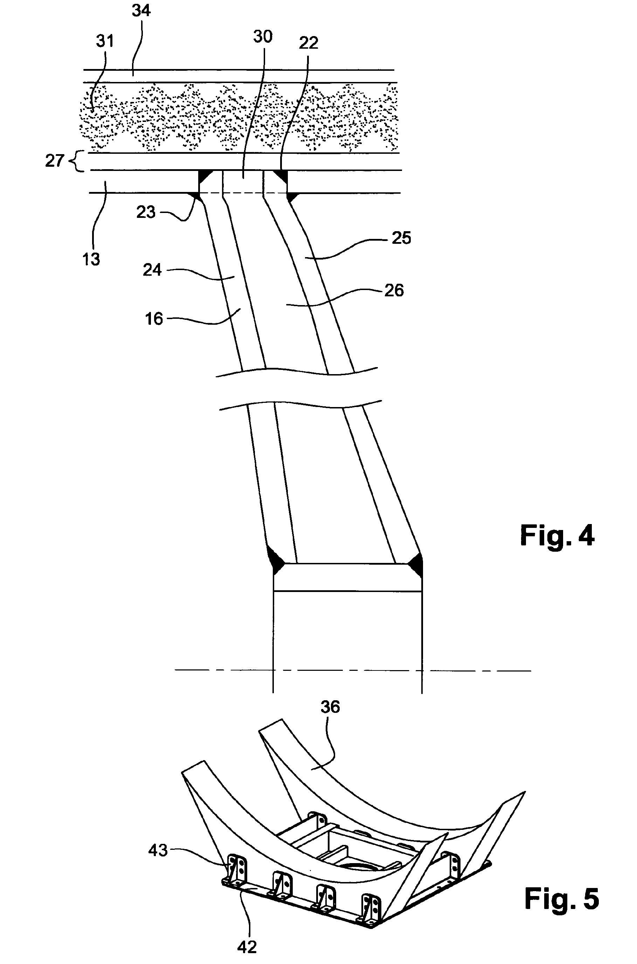

Selon un mode de réalisation, représenté sur les figures 3 et 4, chaque cloison 16, 17, 18 peut présenter une structure sandwich. Ainsi, dans l'exemple de réalisation de la figure 3, chaque cloison 16, 17, 18 comprend deux parois 24 et 25 en plastique entre lesquelles se trouve un stratifié 26.

La cloison peut être pleine, comme représenté sur la figure 3, ou creuse, comme représenté sur la figure 4. Une cloison pleine permet de séparer le corps de citerne en plusieurs compartiments, qui peuvent ainsi avoir des contenus différents. Une cloison creuse joue le rôle de brise flots, ce qui est particulièrement intéressant lorsque la citerne contient des produits liquides.

Une fois que les tronçons 2, 3, 4 et 5 munis de leurs cloisons éventuelles ont été fabriqués, ils sont assemblés.

Pour cela, les tronçons 2, 3, 4 et 5 sont d'abord assemblés entre eux par soudage puis l'ensemble ainsi réalisé est recouvert d'une première peau en matériau composite qui enveloppe l'ensemble de tronçons.

Cette première peau 27 comporte des fibres et une résine.

Dans ce mode de réalisation, la première peau 27 comporte deux groupes de fibres :
- un premier groupe de fibres qui forment un angle de 90° avec l'axe de référence,
- un deuxième groupe de fibres qui forment un angle de 50° avec l'axe de référence.

Le premier groupe de fibres est de préférence enroulé sur les tronçons, tandis que le deuxième groupe de fibres est enroulé sur le premier groupe de fibres.

Ainsi, la première peau comporte de préférence deux couches 28 et 29, correspondant aux deux groupes de fibres.

Les fibres de la première peau sont de préférence des fibres de carbone.Cette résine est de préférence choisie dans le groupe suivant : résine polyester, résine vinylester, résine epoxyde, résine phénolique, résine thermoplastique (polypropylène, polyamide) . La première peau et le soudage permettent ainsi d'assembler solidement les tronçons entre eux.

Lorsqu'un des compartiments du corps de citerne est sous pression, on peut également prévoir, comme représenté sur la figure 3, d'encastrer le pourtour 30 du stratifié 26 de cette cloison dans la première peau de façon à augmenter la résistance de la liaison entre la cloison et le tronçon. Dans ce cas, le pourtour 30 du stratifié 26 de la cloison 16 est encastré dans la première peau, tandis que le pourtour des parois 24, 25 en plastique est encastré dans la paroi latérale 13 du tronçon auquel la cloison 16 appartient.

Par contre, lorsque les efforts exercés sur la cloison sont moindres, on peut prévoir d'encastrer le pourtour 30 du stratifié 26 seulement dans la première peau, comme représenté sur la figure 4.

Une fois la première peau mise en place sur les tronçons, un matériau alvéolaire léger 31 est placé sur la première peau 27 de façon à ce qu'il recouvre la première peau 27. Ce matériau alvéolaire léger 31 peut par exemple du balsa et/ou de la mousse, comme de la mousse polyuréthane.

On peut placer du balsa dans les zones 32 hachurées qui nécessite un renforcement mécanique, et de la mousse polyuréthane dans les autres zones 33.

Le matériau alvéolaire léger 31 est ensuite recouvert d'une peau extérieure 34 en matériau composite. Ainsi, le corps de citerne comporte une paroi qui présente une structure sandwich, formée par la paroi latérale 12, 13, 14, 15 des tronçons et la première peau 27, le matériau alvéolaire léger 31 et la paroi extérieure 34.

Le corps de citerne 1 ainsi réalisé est ainsi léger et résistant mécaniquement.

Chaque fond de citerne 9, 10 présente une structure sandwich, qui est de préférence identique à la structure sandwich de la paroi latérale du corps de citerne de sorte que les fonds de citerne 9, 10 sont dans la continuité du corps de citerne.

Les fonds de citerne sont de préférence fixés mécaniquement au corps de citerne.

Le véhicule citerne comporte également des berces 35, 36, 37, 38, 39, 40, 41, représentées plus précisément sur la figure 5. Ces berces sont fixées sous le corps de citerne 1 de façon à permettre au corps de citerne de venir reposer sur un support.

Ces berces 35, 36, 37, 38, 39, 40, 41 épousent la partie basse du corps de citerne 1. Ainsi, chaque berce 35, 36, 37, 38, 39, 40, 41 comporte de préférence une surface d'appui 36 qui épouse une partie 37 du corps de citerne 1. Cette surface d'appui 36 ne fait de préférence pas le tour de la circonférence du corps de citerne, mais épouse juste une portion 37 du corps de citerne, ce qui permet d'alléger le poids de la citerne.

Chaque berce 35, 36, 37, 38, 39, 40, 41 est de préférence réalisée dans un matériau composite et présente de préférence une structure sandwich. Ainsi, chaque berce comporte de préférence une couche d'un matériau alvéolaire léger, qui est de préférence du balsa, prise en sandwich entre deux peaux stratifiées, de préférence en fibres de carbone et résine.

Les berces 35, 36, 37, 38, 39, 40, 41 sont de préférence fixées au corps de citerne 1 grâce à une deuxième peau en matériau composite.

La deuxième peau qui permet de fixer les berces au corps de citerne comporte, une résine, et des fibres. Ces fibres de la deuxième peau sont de préférence des fibres de carbone.

Le nombre de berces utilisées dépend notamment de la longueur du corps de citerne. Dans cet exemple de réalisation, le véhicule citerne comporte sept berces 35, 36, 37, 38, 39, 40, 41. Au roulage, le véhicule citerne est autoporté entre la berce 36 et la berce 38 : en effet une sellette d'attelage est fixée sur les berces 35 et 36 et le train roulant est fixé sur les berces 38, 39, 40 et 41.

Lorsque le véhicule citerne est garé, une béquille est fixée à la berce 37, de sorte que le véhicule citerne est autoporté entre la berce 37 et les berces 38, 39, 40 et 41 auxquelles est fixée le train roulant.

La fixation de la sellette d'attelage 42 aux berces 35 et 36 est représentée plus précisément sur la figure 5. Ainsi la sellette d'attelage 42 est fixée aux berces 35 et 36 grâce à des équerres 43 qui sont boulonnées sur les berces 35 et 36. Les équerres 43 sont de préférence boulonnées sur les berces grâce à des boulons qui traversent chaque berce 35, 36 de part en part.

Les autres éléments de la structure routière, c'est-à-dire la béquille et le train d'attelage, sont de préférence fixés aux berces de la même manière.

Naturellement l'invention n'est pas limitée aux modes de réalisation décrits en référence aux figures et des variantes peuvent être envisagées sans sortir du cadre de l'invention. On pourrait notamment envisager de réaliser un corps de citerne qui présente une autre géométrie, par exemple tronconique. De même, les fibres de la première peau pourraient être enroulées autour des tronçons suivant d'autres directions, en fonction des efforts auxquels le corps de citerne doit résister.

## Revendications

1. Citerne autoportée comportant un corps de citerne (1) comportant plusieurs tronçons (2, 3, 4, 5), dans laquelle les tronçons (2, 3, 4, 5) sont assemblés par soudage entre eux et recouverts d'une première peau en matériau composite (27) ***enveloppant de manière continue l'ensemble des tronçons (2, 3, 4, 5), ladite première peau*** comporte un enroulement filamentaire qui maintient les tronçons assemblés, la première peau (27) étant recouverte d'un matériau alvéolaire léger (31), le matériau alvéolaire léger (31) étant recouvert d'une peau extérieure (34) en matériau composite.

2. Citerne autoportée selon la revendication précédente, dans laquelle la première peau (27) comporte des fibres, les fibres étant enroulées autour des tronçons (2, 3, 4, 5) selon deux directions.

3. Citerne autoportée selon la revendication précédente, dans laquelle le corps de citerne (1) s'étend suivant un axe de référence (8), un premier groupe (28) de fibres de la première peau (27) formant un angle de 90° avec l'axe de référence (8), un deuxième groupe (29) de fibres formant un angle compris entre 40° et 60°avec l'axe de référence (8).

4. Citerne autoportée selon l'une des revendications précédentes, dans laquelle le corps de citerne (1) présente deux extrémités (6, 7), chaque extrémité (6, 7) étant pourvue d'un fond de citerne (9, 10) en matériau composite.

5. Citerne autoportée selon l'une des revendications précédentes, dans laquelle chaque tronçon (2, 3, 4, 5) comporte une paroi latérale (12, 13, 14, 15), au moins un des tronçons (3, 4, 5) étant pourvu d'une cloison (16, 17, 18), la cloison (16, 17, 18) étant encastrée dans la paroi latérale (13, 14, 15) dudit tronçon (3, 4, 5).

6. Citerne autoportée selon la revendication précédente, dans laquelle la cloison (16, 17, 18) est en outre soudée à la paroi latérale (13, 14, 15) dudit tronçon.

7. Citerne autoportée selon l'une des revendications précédente, dans laquelle le corps de citerne (1) est pourvu de berces (35, 36, 37, 38, 39, 40, 41) permettant au corps de citerne de venir en appui sur un support, les berces (35, 36, 37, 38, 39, 40, 41) étant fixées au corps de citerne (1) grâce à une deuxième peau en matériau composite.

8. Citerne autoportée selon la revendication précédente, dans laquelle les berces (35, 36, 37, 38, 39, 40, 41) sont constituées d'un matériau composite présentant une structure sandwich.

9. Citerne autoportée selon l'une des revendications précédentes, comportant en outre des canaux de réchauffage situés à l'intérieur de la structure sandwich.

10. Véhicule citerne autoporté comportant une citerne autoportée selon l'une des revendications précédentes.

11. Véhicule citerne autoporté selon la revendication précédente lorsqu'il comporte une citerne selon l'une des revendications 7 ou 8, le véhicule citerne comportant en outre une structure routière (42), les berces (35, 36, 37, 38, 39, 40, 41) étant fixées à la structure routière (42) par l'intermédiaire d'équerres (43) boulonnées sur lesdites berces (35, 36, 37, 38, 39, 40, 41).

12. Procédé de réalisation d'un corps de citerne pour citerne autoportée selon l'une des revendications 1 à 9, le procédé comportant les étapes suivantes :
- Réalisation de tronçons (2, 3, 4, 5);
- Assemblage de ces tronçons (2, 3, 4, 5) par soudage et recouvrement de ces troçons (2, 3, 4, 5) d'une première peau (27) en matériau composite en enveloppant de manière continue l'ensemble des tronçons (2,3,4,5), ladite première peau comporte un enroulement filamentaire qui maintient les tronçons assemblés;
- Recouvrement de la première peau (27) par un matériau alvéolaire léger (31);
- Recouvrement du matériau alvéolaire léger (31) par une peau extérieure (34) en matériau composite.

13. Procédé selon la revendication précédente, comportant en outre une étape de fixation de deux fonds de citerne (9 , 10) en matériau composite sur chacune des extrémités (6, 7) du corps de citerne (1).

14. Procédé selon l'une des revendications 12 ou 13, dans lequel, lors de l'étape de réalisation des tronçons (2, 3, 4, 5), au moins un des tronçons (3, 4, 5) est pourvu d'une cloison (16, 17, 18) transversale.

## Patentansprüche

1. Selbstgetragener Tank mit einem Tankkörper (1), umfassend mehrere Abschnitte (2, 3, 4, 5), in dem die Abschnitte (2, 3, 4, 5) per Verschweißen untereinander montiert sind und mit einer ersten Haut aus Verbundmaterial (27) abgedeckt sind, die kontinuierlich alle Abschnitte (2, 3, 4, 5) umhüllt, wobei die genannte erste Haut eine Drahtwicklung umfasst, die die montierten Abschnitte hält, wobei die erste Haut (27) mit einem leichten Wabenmaterial (31) abgedeckt ist, wobei das leichte Wabenmaterial (31) mit einer äußeren Haut (34) aus Verbindmaterial abgedeckt ist.

2. Selbstgetragener Tank gemäß dem voranstehenden Anspruch, in dem die erste Haut (27) Fasern umfasst, wobei die Fasern gemäß zwei Richtungen um Abschnitte (2, 3, 4) gewickelt sind.

3. Selbstgetragener Tank gemäß dem voranstehenden Anspruch, in dem der Tankkörper (1) sich gemäß einer Bezugsachse (8) erstreckt, wobei eine erste Gruppe (28) von Fasern der ersten Haut (27) einen Winkel von 90° mit der Bezugsachse (8) bildet, wobei eine zweite Gruppe (29) von Fasern einen zwischen 40° und 60° inbegriffenen Winkel mit der Bezugsachse (8) bildet.

4. Selbstgetragener Tank gemäß einem der voranstehenden Ansprüche, in dem der Tankkörper (1) zwei Enden (6, 7) aufweist, wobei jedes Ende (6, 7) mit einem Tankboden (9, 10) aus Verbundmaterial versehen ist.

5. Selbstgetragener Tank gemäß einem der voranstehenden Ansprüche, in dem jeder Abschnitt (2, 3, 4, 5) eine Seitenwand (12, 13, 14, 15) umfasst, wobei wenigstens einer der Abschnitte (3, 4, 5) mit einer Trennwand (16, 17, 18) versehen ist, wobei die Trennwand (16, 17, 18) in der Seitenwand (13, 14, 15) des genannten Abschnitts (3, 4, 5) eingebaut ist.

6. Selbstgetragener Tank gemäß dem voranstehenden Anspruch, in dem die Trennwand (16, 17, 18) darüber hinaus an der Seitenwand (13, 14, 15) des genannten Abschnitts verschweißt ist.

7. Selbstgetragener Tank gemäß einem der voranstehenden Ansprüche, in dem der Tankkörper (1) mit Kettelsätteln (35, 36, 37, 38, 39, 40, 41) versehen ist, die es dem Tankkörper ermöglichen, sich auf einen Träger aufzustützen, wobei die Kettelsättel (35, 36, 37, 38, 39, 40, 41) anhand einer zweiten Haut aus Verbundmaterial am Tankkörper (1) befestigt sind.

8. Selbstgetragener Tank gemäß dem voranstehenden Anspruch, in dem die Kettelsättel (35, 36, 37, 38, 39, 40, 41) aus einem Verbundmaterial gebildet sind, das eine Sandwichstruktur aufweist.

9. Selbstgetragener Tank gemäß einem der voranstehenden Absprüche, umfassend darüber hinaus Heizkanäle, die sich im Innern der Sandwichstruktur befinden.

10. Selbstgetragener Tankwagen, umfassend einen selbst getragenen Tank gemäß einem der voranstehenden Ansprüche.

11. Selbstgetragener Tankwagen gemäß dem voranstehenden Anspruch, wenn er einen Tank gemäß Anspruch 7 oder 8 umfasst, wobei das Tankfahrzeug darüber hinaus eine Straßenstruktur (42) umfasst, wobei die Kettelsättel (35, 36, 37, 38, 39, 40, 41) mithilfe von verbolzten Winkeln (42) auf den genannten Kettelsätteln (35, 36, 37, 38, 39, 40, 41) an der Straßenstruktur (42) befestigt sind.

12. Realisierungsverfahren eines Tankkörpers für einen selbstgetragenen Tank gemäß Anspruch 1 bis 9, wobei das Verfahren die folgenden Stufen umfasst:
- Realisierung von Abschnitten (2, 3, 4, 5);
- Montage dieser Abschnitte (2, 3, 4, 5) durch Verschweißen und Abdeckung dieser Abschnitte (2, 3, 4, 5) mit einer ersten Haut (27) aus Verbundmaterial durch kontinuierliches Umhüllen der Abschnitte (2, 3, 4, 5), wobei die genannte erste Haut eine Drahtwicklung umfasst, die die Abschnitte montiert hält;
- Abdeckung der ersten Haut (27) durch ein leichtes Wabenmaterial (31);
- Abdeckung des leichten Wabenmaterials (31) durch eine Außenhaut (34) aus Verbundmaterial.

13. Verfahren gemäß dem voranstehenden Anspruch, umfassend darüber hinaus eine Befestigungsstufe von zwei Tankböden (9, 10) aus Verbundmaterial auf jedem Ende (6, 7) des Tankkörpers (1).

14. Verfahren gemäß Anspruch 12 oder 13, in dem bei der Realisierungsstufe der Abschnitte (2, 3, 4, 5) wenigstens einer der Abschnitte (3, 4, 5) mit einer transversalen Querwand (16, 17, 18) versehen ist.

## Claims

1. Self-supporting tank comprising a tank body (1) comprising several segments (2, 3, 4, 5), in which the segments (2, 3, 4, 5) are assembled by welding them to each other and are covered by a first skin made of a composite material (27) continuously surrounding all the segments (2, 3, 4, 5), said first skin comprises a filamentary winding that holds the segments together, the first skin (27) being covered with a lightweight honeycomb material (31), the lightweight honeycomb material (31) being covered with an external skin (34) made of a composite material.

2. Self-supporting tank according to the previous claim, in which the first skin (27) comprises fibres, the fibres being wound around the segments (2, 3, 4, 5) in two directions.

3. Self-supporting tank according to the previous claim, in which the tank body (1) extends along a reference axis (8), a first group (28) of fibres of the first skin (27) forming an angle of 90° with the reference axis (8), a second group (29) of fibres forming an angle between 40° and 60° with the reference axis (8).

4. Self-supporting tank according to any of the previous claims, in which the tank body (1) has two ends (6, 7), each end (6, 7) being fitted with a tank bottom (9, 10) made of a composite material.

5. Self-supporting tank according to one of the previous claims, in which each segment (2, 3, 4, 5) comprises a sidewall (12, 13, 14, 15), at least one of the segments (3, 4, 5) being fitted with a partition (16, 17, 18), the partition (16, 17, 18) being embedded in the sidewall (13, 14, 15) of said segment (3, 4, 5).

6. Self-supporting tank according to the previous claim, in which the partition (16, 17, 18) is also welded to the sidewall (13, 14, 15) of said segment.

7. Self-supporting tank according to one of the previous claims, in which the tank body (1) is fitted with cradles (35, 36, 37, 38, 39, 40, 41) so that the tank body bears on a support, the cradles (35, 36, 37, 38, 39, 40, 41) being fixed to the body of the tank (1) by a second skin made of a composite material.

8. Self-supporting tank according to the previous claim, in which the cradles (35, 36, 37, 38, 39, 40, 41) are made of a composite material with a sandwich structure.

9. Self-supporting tank according to one of the previous claims, also comprising heating channels located inside the sandwich structure.

10. Self-supporting tanker vehicle comprising a self-supporting tank according to any one of the previous claims.

11. Self-supporting tanker vehicle according to the previous claim when it comprises a tank according to one of claims 7 or 8, the tanker vehicle also comprising a suspension structure (42), the cradles (35, 36, 37, 38, 39, 40, 41) being fixed to the suspension structure (42) through brackets (43) bolted onto said cradles (35, 36, 37, 38, 39, 40, 41).

12. Method of manufacturing a tank body for a self-supporting tank according to one of claims 1 to 9, the method comprising the following steps:
- Manufacture the segments (2, 3, 4, 5);
- Assemble these segments ((2, 3, 4, 5) by welding and cover these segments (2, 3, 4, 5) with a first skin (27) made of a composite material continuously surrounding all the segments (2, 3, 4, 5), said first skin comprises a filamentary winding that keeps the segments together;
- Cover the first skin (27) with a lightweight honeycomb material (31);
- Cover the lightweight honeycomb material (31) with an external skin (34) made of a composite material.

13. Method according to the previous claim, also comprising a step in which the two tank ends (9, 10) made of composite material are fixed to each of the ends (6, 7) of the tank body (1).

14. Method according to either claim 12 or 13, in which at least one of the segments (2, 3, 4, 5) is fitted with a transverse partition (16, 17, 18) during the step to manufacture the segments (2, 3, 4, 5).
